# EUROPEAN PATENT APPLICATION

(11) **EP 2 172 792 A1**
(43) Date of publication of application: **07.04.2010**
(21) Application number: 08791974.2
(22) Date of filing: 31.07.2008
(51) Int. Cl.: G02B 1/04, B29C 39/02, C08F 2/44, C08K 3/08, C08K 3/22, C08K 5/07, C08K 5/3492, C08L 33/14, G02C 7/02, B29L 11/00

(54) **PLASTIC LENS AND METHOD OF MANUFACTURING THE SAME**

(30) Priority: 31.07.2007 JP 2007199935
(71) Applicant: Hoya Corporation, Tokyo 161-8525 (JP)
(72) Inventor: ITOH, Shinsuke, Tokyo 161-8525 (JP); KOUSAKA, Masahisa, Tokyo 161-8525 (JP)
(74) Representative: Albrecht, Thomas
(86) International application number: PCT/JP2008/063759
(87) International publication number: WO 2009/017191

(57) **Abstract**

A plastic lens exhibiting excellent ability of absorbing ultraviolet light having a wavelength of about 400 nm, suppressed coloring and excellent transparency and a process for producing the plastic lens are provided. The plastic lens comprises a plastic lens substrate obtained by polymerizing a composition comprising (A) a lens material monomer, (B) a cobalt compound expressed by CoO·Al₂O₃ and/or Co·Al₂O₄, (C) fine particles of Au having an average diameter of 1 to 1,000 nm and (D) at least one ultraviolet light absorber selected from benzophenone-based ultraviolet light absorbers and benzotriazole-based ultraviolet light absorbers. The process comprises mixing Component (A), a dispersion of a cobalt compound which comprises Component (B), a dispersion of fine particles of Au which comprises Component (C) and Component (D), and polymerizing the obtained composition to prepare a plastic lens substrate.

## Description

### TECHNICAL FIELD

The present invention relates to a plastic lens and a process for producing a plastic lens and, more particularly, to a plastic lens exhibiting excellent ability of absorbing ultraviolet light having a wavelength of about 400 nm, suppressed coloring and excellent transparency and a process for producing the plastic lens.

### BACKGROUND ART

Ultraviolet light is an electromagnetic wave having a wavelength of about 200 to 400 nm and considered to exhibits various adverse effects on the human body. As for spectacle lenses, a lens absorbing ultraviolet light is increasingly required from the standpoint of protection of human eyes.
The ability to absorb ultraviolet light can be provided to a plastic spectacle lens by various methods. As one of such methods, a plastic lens obtained by mixing an ultraviolet light absorber with a plastic lens monomer, followed by polymerizing the obtained mixture, is proposed. However, a problem arises widely in that yellowing takes place in the plastic lens material for spectacles, and the appearance deteriorates. This phenomenon tends to take place markedly when diethylene glycol bisallylcarbonate which is a typical plastic lens material for spectacles is used.
A dye or a pigment may be used for the lens which tends to have the yellowing as described above so that the yellowing is hidden. However, this method has a drawback in that discoloration of the dye or the pigment takes place during preparation of the lens by radical polymerization of the lens material, and it becomes difficult that the yellowing is suitably hidden.

To overcome the above problem, a plastic lens which is obtained by using a specific ultraviolet light absorbent based on benzophenone such as 2-hydroxy-4-octyloxybenzophenone and, moreover, a cobalt compound expressed by CoO·Al₂O₃ and/or Co·Al₂O₄ to improve the hue, is proposed (For example, Patent Reference 1). This plastic lens exhibits more suppressed coloring and improved transparency than those of conventional plastic lenses. However, development of a plastic lens exhibiting still more suppressed coloring and improved transparency without adversely affecting the ability of absorbing ultraviolet light having a wavelength of about 400 nm is desired to cope with the severe requirement by consumers.

{Patent Reference 1] Japanese Patent Application Laid-Open No. 2005-107192

### DISCLOSURE OF THE INVENTION

### [Problems to be Overcome by the Invention]

The present invention has been made to overcome the above problem and has an object of providing a plastic lens exhibiting excellent ability of absorbing ultraviolet light having a wavelength of about 400 nm, suppressed coloring and excellent transparency and a process for producing the plastic lens.

### [Means for Overcoming the Problems]

As the result of intensive studies by the present inventors to achieve the above object, it was found that the above object could be achieved by using fine particles of gold having a specific property. The present invention has been completed based on the knowledge.
The present invention can be summarized as follows.

1. A plastic lens which comprises a plastic lens substrate obtained by polymerizing a composition comprising following Components (A) to (D):
   (A) a lens material monomer;
   (B) a cobalt compound expressed by CoO·Al₂O₃ and/or Co·Al₂O₄;
   (C) fine particles of Au having an average diameter of 1 to 1,000 nm; and
   (D) at least one ultraviolet light absorber selected from benzophenone-based ultraviolet light absorbers and benzotriazole-based ultraviolet light absorbers.
2. A plastic lens described in 1, which further comprises component (E) a polymerization initiator which is at least one selected from organic peroxides and organic azobis compounds.
3. A plastic lens described in any one of 1 and 2, wherein the plastic lens is a plastic lens for spectacles.
4. A process for producing a plastic lens which comprises mixing:
   (A) a lens material monomer;
   (B) a dispersion of a cobalt compound which comprises a cobalt compound expressed by CoO·Al₂O₃ and/or Co·Al₂O₄;
   (C) a dispersion of fine particles of Au which comprises fine particles of Au having an average diameter of 1 to 1,000 nm; and
   (D) at least one ultraviolet light absorber selected from benzophenone-based ultraviolet light absorbers and benzotriazole-based ultraviolet light absorbers; and polymerizing an obtained composition to prepare a plastic lens substrate.
5. A process for producing a plastic lens described in 4, wherein component (E) a polymerization initiator which is at least one selected from organic peroxides and organic azobis compounds is further mixed to obtain the composition.
6. A process for producing a plastic lens described in any one of 4 and 5, wherein the plastic lens is a plastic lens for spectacles.

### THE EFFECT OF THE INVENTION

In accordance with the present invention, the plastic lens exhibiting excellent ability of absorbing ultraviolet light having a wavelength of about 400 nm, suppressed coloring and excellent transparency can be obtained.
THE MOST PREFERRED EMBODIMENT TO CARRY OUT THE INVENTION

The plastic lens of the present invention comprises a plastic lens substrate obtained by polymerizing a composition comprising the following Components (A) to (D) and may further comprise the following Component (E).
(A) A lens material monomer.
(B) A cobalt compound expressed by CoO·Al₂O₃ and/or Co·Al₂O₄.
(C) Fine particles of Au having an average diameter of 1 to 1,000 nm.
(D) At least one ultraviolet light absorber selected from benzophenone-based ultraviolet light absorbers and benzotriazole-based ultraviolet light absorbers.
(E) A polymerization initiator which is at least one selected from organic peroxides and organic azobis compounds.
   The components described above will be described specifically in the following.

### [(A) Lens material monomer]

As the lens material monomer of Component (A), monomers conventionally used as the lens material can be used without special restrictions. Examples of the lens material monomer include isocyanate compounds, polythiol compounds, polyol compounds and allyl compounds. Examples of the isocyanate compound include alicyclic isocyanate compounds such as 1,3-bisisocyanatomethylcyclohexane, hydrogenated 2,6-tolylene diisocyanate, hydrogenated meta- and para-xylylene diisocyanates and isophorone diisocyanate; isocyanate compound having no alicyclic or aromatic structure such as 2,6-tolylene diisocyanate, 4,4'-diphenylmethane diisocyanate, meta- and para-xylylene diisocyanate, meta- and para-tetramethylxylylene diisocyanate, 2,6-naphthalene diisocyanate, hexamethylene diisocyanate, reaction products thereof by the biuret reaction, trimers thereof, 2,2,4-trimethylhexamethylene diisocyanate, lysine triisocyanate and 1,6,11-undecane triisocyanate; and isocyanate compounds having sulfur such as diphenyl disulfide 4,4'-diisocyanate, 3,3'-dimethoxydiphenyl disulfide 4,4'-diisocyanate, 1,4-dithiane 2,5-diisocyanate, 1,4-dithiane 2-isocyanatomethyl-5-isocyanatopropyl, 1,3-dithiolane 4,5-diisocyanate, 1,3-dithiolane 4,5-diisocyanatomethyl, 1,3-dithiolane 2-methyl-4,5-diisocyanatomethyl and tetrahydrothiophene 2,5-diisocyanate. Examples of the polythiol compound include aliphatic thiols such as methanedithiol, ethanedithiol, propanedithiol, 1,6-hexanedithiol, 1,2,3-propanetriol, tetrakis(mercaptomethyl)methane, 1,1-cyclohexanedithiol, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate) and 1,2-bis(2-mercaptoethylthio)-3-mercaptopropane; aromatic thiols such as 1,2-dimercaptobenzene, 1,2-bis(mercaptomethyl)benzene, 1,2-bis(mercaptomethoxy)benzene, 1,2,3-trimercaptobenzene, 1,2,3-tris(mercaptomethyl)benzene and 1,2,3-tris(mercaptomethoxy)benzene; aromatic thiols substituted with a halogen, for example, chlorine or bromine such as 2,5-dichlorobenzene-1,3-dithiol, 1,3-di(p-chlorophenyl)propane-2,2-dithiol, 3,4,5-tri-bromo-1,2-dimercaptobenzene and 2,3,4,6-tetrachloro-1,5-bis(mercaptomethyl)benzene; aromatic thiols having sulfur atom in addition to mercapto group such as 1,2-bis(mercaptomethylthio)benzene, 1,2,3-tris-(mercaptomethylthio)benzene, 1,2,3,4-tetrakis(mercaptomethylthio)-benzene and compounds obtained by substitution with alkyl groups at the nucleus of these compounds; bis(mercaptomethyl) sulfide, bis(mercaptomethylthio)methane, 2-mercaptoethylthio-1,3-propanedithiol, 1,2,3-tris(mercaptomethylthio)propane, tetrakis(mercaptomethylthiomethyl)methane, bis(2,3-dimercaptopropyl) sulfide, 2,5-dimercapto-1,4-dithiane, bis(mercaptomethyl) disulfide and esters of these compounds with thioglycolic acid and mercaptopropionic acid; aliphatic thiols having sulfur atom in addition to mercapto group such as hydroxymethyl sulfide bis(2-mercaptoacetate), hydroxymethyl sulfide bis(3-mercaptopropionate), hydroxymethyl disulfide bis(2-mercaptoacetate), hydroxymethyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thiogylcolic acid bis(2-mercaptoethyl ester), thiodipropionic acid bis(2-mercatoethyl ester), dithiodiglycolic acid bis(2-mercaptoethyl ester) and 4-mereaptomethyl-3,6-dithiaoctane-1,8-dithiol; and heterocyclic compound having sulfur atom in addition to mercapto group such as 3,4-thiophenedithiol, tetrahydrothiophene-2,5-dimercaptomethyl, 2,5-dimercapto-1,3,4-thiadiazole, 2,5-dimercapto-1,4-dithiane and 2,5-dimercaptomethyl-1,4-dithane. Examples of the polyol compound include aliphatic polyols such as ethylene glycol, diethylene glycol, neopentyl glycol, glycerol, trimethylolethane, trimethylolpropane, butanetriol, 1,2-methylglucoside, pentaerythritol, dipentaerythritol, tripentaerythritol, triethylene glycol, polyethylene glycol, cyclobutanediol, cyclopentanediol and butylcyclohexanediol; aromatic polyols such as dihydroxynaphthalene, trihydroxynaphthalene, tetrahydroxynaphthalene, dihydroxybenzene, benzenetriol, trihydroxyphenanthrene, bisphenol A, bisphenol F, xylylene glycol, tetrabromobisphenol A and addition products of these aromatic polyols with alkylene oxides such as ethylene oxide and propylene oxide; bis-[4-(hydroxyethoxy)phenyl] sulfide, bis-[4-(2,3-dihydroxypropoxy)phenyl] sulfide, bis-[4-(4-hydroxycyclohexyloxy)phenyl] sulfide, addition products of these compounds with 3 molecules or less of ethylene oxide and/or propylene oxide in average per one hydroxyl group in these compounds; polyols having sulfur atom such as di(2-hydroxyethyl) sulfide, 1,2-bis(2-hydroxyethylmercapto)ethane, bis(2-hydroxyethyl) disulfide, 1,4-dithiane-2,5-diol, bis(2,3-dihydroxypropyl) sulfide, tetrakis(4-hydroxy-2-thiabutyl)methane and bis(4-hydroxyphenyl) sulfone (the commercial name: Bisphenol S). Examples of the allyl compound include allyl sulfide, diallyl phthalate and diethylene glycol bisallylcarbonate. The above monomers may be used singly or in combination of two or more. Among these monomers, monomers comprising diethylene glycol bisallylcarbonate are preferable as the lens material monomer. The monomer comprising diethylene glycol bisallylcarbonate means diethylene glycol bisallylcarbonate used singly or a mixed monomer comprising diethylene glycol bisallylcarbonate and monomers copolymerizable with diethylene glycol bisallylcarbonate.

Examples of the monomer copolymerizable with diethylene glycol bisallylcarbonate include aromatic vinyl compounds such as styrene, α-methylstyrene, vinyltoluene, chlorostyrene, chloromethylstyrene and divinylbenzene; mono(meth)acrylates such as methyl (meth)acrylate, n-butyl (meth)acrylate, n-hexyl (meth)acrylate, cyclohexyl (meth)acrylate, 2-ethylhexyl (meth)acrylate, methoxydiethylene glycol (meth)acrylate, methoxypolyethylene glycol (meth)acrylate, 3-chloro-2-hydroxypropyl (meth)acrylate, stearyl (meth)acrylate, lauryl (meth)acrylate, phenyl (meth)acrylate, glycidyl (meth)acrylate and benzyl (meth)acrylate; mono(meth)acrylates having hydroxyl group such as 2-hydroxyethyl (meth)acrylate, 2-hydroxypropyl (meth)acrylate, 3-hydroxypropyl (meth)acrylate, 3-phenoxy-2-hydroxypropyl (meth)acrylate and 4-hydroxybutyl (meth)acrylate; di(meth)acrylates such as ethylene glycol di(meth)acrylate, diethylene glycol di(meth)acrylate, triethylene glycol di(meth)acrylate, polyethylene glycol di(meth)acrylate, 1,3-butylene glycol di(meth)acrylate, 1,6-hexanediol di(meth)acrylate, neopentyl glycol di(meth)acrylate, polypropylene glycol di(meth)acrylate, 2-hydroxy-1,3-di(meth)acryloxypropane, 2,2-bis[4-((meth)acryloxyethoxy)phenyl]propane, 2,2-bis[4-((meth)acryloxy·diethoxy)phenyl]propane and 2,2-bis[4-((meth)-acryloxy·polyethoxy)phenyl]propane; tri(meth)acrylates such as trimethylolpropane tri(meth)acrylate and tetramethylolmethane tri(meth)acrylate; tetra(meth)acrylates such as tetramethylolmethane tetra(meth)acrylate; and diallylphthalates such as diallyl phthalate, diallyl isophthalate and diallyl terephthalate. These monomers may be used singly or in combination of two or more. In the above description, "(meth)acrylate" means "methacrylate" or "acrylate", and "(meth)acryloxy" means "methacryloxy" or "acryloxy".

In the present invention, compounds having an aromatic ring are preferable among the above compounds from the standpoint of providing a plastic lens exhibiting a great refractive index. Copolymers of diethylene glycol bisallylcarbonate with other monomers are known, and examples of the copolymers include copolymers described in Japanese Patent Application Laid-Open Nos. Showa 54(1979)-41965, Showa 51(1976)-125487 and Heisei 01(1989)-503809. Mixtures of diethylene glycol bisallylcarbonate with monomers copolymerizable with diethylene glycol bisallylcarbonate described in these publications can be used as the lens material monomer in the present invention.

### [(B) Cobalt compound]

The cobalt compound expressed by CoO·Al₂O₃ and/or Co·Al₂O₄ of Component (B) is a known compound disclosed in the specifications of Japanese Patent Application Laid-Open Nos. Heisei 5(1993)-195445 and Heisei 5(1993)-195446 and USP 4,273,702, and the bluing function of the cobalt compound is a known function disclosed in Japanese Patent Application Laid-Open No. Heisei 5(1993)-195445.
In the present invention, it is preferable that the diameter of particles of the cobalt compound is 1 to 1,000 nm, more preferably 1 to 500 nm and most preferably 1 to 60 nm.
It is preferable that the content of Component (B) is 0.00005 to 0.005% by mass and more preferably 0.001 to 0.005% by mass based on the amount of the entire plastic lens substrate. When the content is within the above range, the plastic lens of the present invention exhibits excellent properties with suppressed coloring and excellent transparency.

### [(C) Fine particles of Au]

It is necessary that the fine particles of Au of Component (C) has an average diameter of 1 to 1,000 nm, and it is preferable that the average diameter is 1 to 500 nm. Fine particles of Au having an average diameter in the above range exhibits reddish color. By using the fine particles of Au described above, the plastic lens of the present invention exhibits more suppressed coloring and more excellent transparency. The average diameter of the fine particles of Au is the value obtained by the measurement using an apparatus for measuring distribution of the particle diameter of the dynamic light scattering type (the type "LB-500"; manufactured by HORIBA Ltd.). The process for producing the fine particles of Au such as the gas phase process and the liquid reduction process and other properties of the fine particles of Au such as the coefficient of variation of the particle diameter are not particularly limited as long as the average diameter is within the above range.
It is preferable that the content of Component (C) is 0.00003 to 0.001% by mass and more preferably 0.00005 to 0.0001% by mass based on the amount of the entire plastic lens substrate. When the content is within the above range, the effect of the addition of the fine particles of Au can be sufficiently obtained, and the plastic lens of the present invention exhibits excellent properties with suppressed coloring and excellent transparency.

### [(D) Ultraviolet light absorber]

It is necessary that the ultraviolet light absorber of Component (D) is at least one absorber selected from benzophenone-based ultraviolet light absorbers and benzotriazole-based ultraviolet light absorbers. Examples of the benzophenone-based ultraviolet light absorber include 2,4-dihydroxybenzophenone, 2-hydroxy-4-acetoxyethoxybenzophenone, 2-hydroxy-4-methoxybenzophenone, 2,2'-dihydroxy-4-methoxybenzophenone, 2,2'-dihydroxy-4,4'-dimethoxybenzophenone, 2-hydroxy-4-n-octoxybenzophenone, 2,2'-dihydroxy-4,4'-dimethoxy-5,5'-disulfobenzophenone-disodium salt, 2-hydroxy-4-octyloxybenzophenone, 2,2',4,4'-tetrahydroxy-4-octyloxybenzophenone and 2,2',4'-trihydroxy-4-octyloxybenzophenone. Examples of the benzotriazole-based ultraviolet light absorber include 2-(2,4-dihydroxyphenyl)benzotriazole, 2-(2,4,6-trihydroxyphenyl)benzotriazole, 2-(2'-hydroxy-5-octylphenyl)benzotriazole, 5-chloro-2-(2,4-dihydroxyphenyl)benzotriazole, 5-(chloro-2-(2,4,6-trihydroxyphenyl)benzotriazole, 5-bromo-2-(2,4-dihydroxyphenyl)benzotriazole, 5-bromo-2-(2,4,6-trihydroxyphenyl)benzotriazole, dichloro-2-(2,4-dihydroxyphenyl)benzotriazole and dibromodichloro-2-(2,4-dihydroxyphenyl)benzotriazole.
Among these compounds, at least one compound selected from 2-hydroxy-4-octyloxybenzophenone, 2,2',4,4'-tetrahydroxy-4-octyloxybenzophenone, 2,2',4'-trihydroxy-4-octyloxybenzophenone and 2-(2'-hydroxy-5-octylphenyl)benzotriazole is preferable, and 2.2',4'-trihydroxy-4-octyloxybenzophenone is more preferable.

It is preferable that the content of the ultraviolet light absorber is 0.01 to 5.0% by mass and more preferably 0.05 to 3.0% by mass based on the amount of the entire plastic lens substrate although the preferable content is varied depending on the ability of absorbing ultraviolet light of the ultraviolet light absorber and the wavelength of ultraviolet light desired to be absorbed. When the content is within the above range, the effect of the addition of the ultraviolet light absorber can be sufficiently obtained, and the plastic lens of the present invention exhibits excellent properties with suppressed coloring and excellent transparency.

### [(E) Polymerization initiator]

The plastic lens substrate of the present invention may further comprise (E) a polymerization initiator.
The polymerization initiator of Component (E) is not particularly limited as long as the polymerization initiator can polymerize the lens material monomer of Component (A), and conventional polymerization initiators can be used. It is preferable that the polymerization initiator is at least one polymerization initiator selected from organic peroxides and organic azo compounds.
Examples of the organic peroxide include benzoyl peroxide, methyl ethyl peroxide, methyl ethyl ketone peroxide, di-t-butyl peroxide, lauroyl peroxide, acetyl peroxide, diisopropyl peroxydicarbonate, bis(4-t-butylcyclohexyl) peroxydicarbonate, t-butyl peroxy-2-ethylhexanoate and t-hexyl peroxy-2-ethylhexanoate. Examples of the organic azo compound include 2,2'-azobisisobutyronitrile, 2,2'-azobis(methyl 2-methylpropionate), 2,2'-azobis(2-methylbutyronitrile), 2,2'-azobis(2,4-dimethylvaleronitrile) and 4,4'-azobis(4-cyanopentanoic acid). Among the above polymerization initiators, at least one polymerization initiator selected from benzoyl peroxide, diisopropyl peroxydicarbonate and t-butyl peroxy-2-ethylhexanoate is preferable.
It is preferable that the content of the polymerization initiator of Component (E) is 0.1 to 5.0% by mass based on the amount of the entire plastic lens substrate. It is known that Component (E) exhibits the bluing function on a lens. This function is described, for example, in Japanese Patent Application Laid-Open No. Heisei 5(1993)-195445.

### [Process for producing a plastic lens]

The process for producing a plastic lens comprises mixing (A) a lens material monomer, (B) a dispersion of a cobalt compound which comprises a cobalt compound expressed by CoO·Al₂O₃ and/or Co·Al₂O₄, (C) a dispersion of fine particles of Au which comprises fine particles of Au having an average diameter of 1 to 1,000 nm and (D) at least one ultraviolet light absorber selected from benzophenone-based ultraviolet light absorbers and benzotriazole-based ultraviolet light absorbers: and polymerizing the obtained composition to prepare a plastic lens substrate. Component (E) the polymerization initiator which is at least one selected from organic peroxides and organic azobis compounds may be mixed to prepare the plastic lens substrate.

In the process of the present invention, preferable embodiments of the dispersion comprising the cobalt compound of Component (B) and the dispersion comprising the fine particles of Au of Component (C) include dispersions obtained by dispersing the corresponding component in a dispersant. Examples of the dispersant include conventional surfactants, alcohols, ethers, hydrocarbons, halogenated hydrocarbons, esters and ketones. Dispersants comprising at least one dispersant selected from alcohols, ethers and surfactants are preferable.
Examples of the alcohol include aliphatic alcohols having 1 to 6 carbon atoms such as methanol, ethanol, propanol and butanol, and butanol is preferable among these alcohols. Examples of the ether include ethylene glycol, propylene glycol, methyl ethyl ether, methyl propyl ether, methyl butyl ether, ethyl propyl ether, ethyl butyl ether, propyl butyl ether, cellosolve, methylcellosolve, butylcellosolve and cellosolve acetate, and methylcellosolve is preferable among these ethers. As the surfactant, conventional surfactants such as amino acids, derivatives of amino acids, peptide compounds, polysaccharides, natural and synthetic macromolecules derived from polysaccharides, compounds having thiol group and compounds having polyethylene oxide group can be used without restrictions. Among these surfactants, nonionic surfactants such as polyoxyethylene alkyl ethers, polyoxyethylene dodecyl ether, polyoxyethylene alkylphenyl ethers, polyoxyethylene nonylphenyl ether, polyoxyethylene octylphenyl ethers; and anionic surfactants such as sodium polynaphthylmethanesulfonate, calcium ligninsulfonate, sodium ligninsulfonate, sodium dioctylsulfosuccinate and sodium dialkylsulfosuccinates are preferable due to the excellent effect of dispersion.

It is preferable that the concentrations of Components (B) and (C) in the dispersions are each 0.5 to 30.0% by mass. When the concentrations are within the above range, the dispersed condition of components (B) and (C) in the plastic lens substrate is excellent, and the effect of the addition of the components can be sufficiently obtained.
Dispersion of Components (B) and (C) into the dispersant can be conducted in accordance with a conventional process for dispersion. Components (B) and (C) may be dispersed in the same dispersant to form a dispersion. In this case, the concentrations of Components (B) and (C) in the dispersion are as described above.

To the composition comprising Components (A) to (E), auxiliary agents such as polymerization catalysts described in Japanese Patent Application Laid-Open Nos. Heisei 07(1995)-063902, Heisei 07(1995)-104101, Heisei 09(1997)-208621 and Heisei 09(1997)-255781, internal mold releases described in Japanese Patent Application Laid-Open Nos. Heisei 01(1989)-163012 and Heisei 03(1991)-281312 and antioxidants may be added, where necessary.

For mixing Components (A) to (E), a conventional process for mixing can be used without restrictions as long as the mixing can be achieved sufficiently. For example, the mixing under stirring can be conducted using a mixer with stirring of the media type such as a ball mill or a mixer with stirring of the medialess type such as a high pressure homogenizer, a homomixer and a clearmix. It is preferable that the composition obtained after the mixing is degassed to remove a portion of the dispersant or the entire dispersant and, then, polymerized to obtain the plastic lens substrate. The process for the degassing is not particularly limited. For example, the degassing can be conducted using a rotary pump for about 0.5 to 1 hour. By removing a portion of the dispersant or the entire dispersant, the plastic lens of the present invention exhibits more excellent properties with more suppressed coloring and more excellent transparency.

As the process for polymerization of the composition comprising Components (A) to (E) obtained as described above, the cast polymerization is preferable although the process is not particularly limited. The composition comprising Components (A) to (E) described above is cast into a casting mold for forming a lens and polymerized by heating at a temperature in the range of -20 to 150°C, and the plastic lens substrate is obtained.

Among the plastic lens substrates obtained by polymerizing the composition comprising Components (A) to (E) described above, a plastic lens substrate exhibiting a YI value (the degree of yellowing) of 0.4 to 1.5 at the center when the thickness at the center is 2.0 mm and a transmittance of 5% or smaller at the wavelength of 385 nm is preferable. It is more preferable that the YI value is 0.4 to 1.0, and the transmittance is 3.0% or smaller. It is most preferable that the YI value is 0.4 to 0.7, and the transmittance is 1.0% or smaller.

### [Plastic lens]

The plastic lens of the present invention comprises the plastic lens substrate obtained as described above. It is preferable that, in the plastic lens of the present invention, the value of the color coordinate a* is 0 to 1, more preferably 0 to 0.2 and most preferably 0 to 0.15 (at a thickness of 20 mm), and the value of the color coordinate b* is -1 to 1, more preferably -0.75 to 1 and most preferably -0.6 to 1 (at a thickness of 20 mm) in the L*a*b* color system. When the value of the color coordinate a* and the value of the color coordinate b* in the L*a*b* color system is within the above range, color such as yellowish color and greenish color is more suppressed in the plastic lens, and the above condition is preferable.
The value of L*, the value of a* and the value of b* described above are values described in the method for expressing color in Japanese Industrial Standard Z8729-2004. These values can be measured, for example, by using a spectroscopic colorimeter (the type: "DOT-3 UV-VIS"; manufactured by MURAKAMI COLOR RESEARCH LABORATORY Co., Ltd.).

It is preferable that the plastic lens of the present invention has a HAZE value (a flat plate having a thickness of 8 mm) of 0 to 1 and more preferably 0 to 0.75. When the HAZE value is within the above range, the plastic lens exhibits decreased haze.

The plastic lens of the present invention can be dyed with a coloring agent. To improve the scratch resistance, a cured coating film may be formed on the plastic lens using a coating fluid comprising inorganic substances such as organosilicon compounds, tin oxide, silicon oxide, zirconium oxide and titanium oxide in the fine particle form. To improve impact resistance, a primer layer comprising a polyurethane as the main component may be formed. To provide the antireflection property, an antireflection film may be formed using silicon oxide, titanium dioxide, zirconium oxide or tantalum oxide. To improve the water-repelling property, a water-repelling film may be formed on the antireflection film using an organosilicon compound having fluorine atom.

The plastic lens produced as described above is advantageous as the plastic lens for spectacles since the lens exhibits suppressed coloring and excellent transparency although the lens absorbs ultraviolet light having a wavelength in the vicinity of 400 nm.

### EXAMPLES

The present invention will be described more specifically with reference to examples in the following. However, the present invention is not limited to the examples. The evaluation of physical properties of the plastic lens obtained in Examples and Comparative Examples were conducted as described in the following.
(1) YI value: The YI value as the degree of yellowing described in Japanese Industrial Standard K7103-1977 was measured in accordance with the test method for the degree of yellowing described in Japanese Industrial Standard K7103-1977.
(2) Transmittance of ultraviolet light: The transmittance of ultraviolet light at the wavelength of 385 nm was measured using a spectrophotometer ("U3410"; manufactured by HITACHI Ltd.).
(3) Luminous transmittance: The luminous transmittance was measured using a spectrophotometer ("U3410").
(4) Value of color coordinate a* and value of color coordinate b* at a thickness of 20 mm: The values of the color coordinate a* and the color coordinate b* in the L*a*b* color system described in Japanese Industrial Standard Z8729-2004 were measured using a spectroscopic colorimeter (the type: "DOT-3 UV-VIS"; manufactured by MURAKAMI COLOR RESEARCH LABORATORY Co., Ltd.).
(5) Appearance: The appearance was evaluated by visual observation.
(6) HAZE value: The HAZE value was measured with a flat plate having a thickness of 8 mm using a haze meter (manufactured by MURAKAMI COLOR RESEARCH LABORATORY Co., Ltd.).

### Example 1

### (a) Preparation of Bluing master fluid A

A bluing master blue fluid was prepared by dispersing 6 parts by mass of a complex compound of cobalt oxide and aluminum oxide (CoO·Al₂O₃ (the diameter of particles: 40 to 50 nm); manufactured by C. I. KASEI Co., Ltd.) in 94 parts by mass of ethanol. A bluing master red fluid was prepared by mixing 2 parts by mass of a mixed fluid, in which 10 parts by mass of fine particles of Au (the diameter of particles: 20 nm; manufactured by NIPPON PAINT Co., Ltd.) were dispersed in 90 parts by mass of ethanol, and 98 parts by mass of diethylene glycol bisallylcarbonate monomer (CR-39). Bluing master fluid A was prepared by mixing 5 parts by mass of the bluing master blue fluid, 5 parts by mass of the bluing master red fluid and 90 parts by mass of diethylene glycol bisallylcarbonate monomer (CR-39).

### (b) Production of a plastic lens

To 100 parts by mass of diethylene glycol bisallycarbonate, 3 parts by mass of diisopropyl peroxydicarbonate as the organic peroxide-based polymerization initiator, 1 part by mass of 2-hydroxy-4-octyloxybenzophenone as the ultraviolet light absorber and 0.6 parts by mass of Bluing master fluid A prepared above in (a) were added. After the resultant mixture was sufficiently mixed by stirring, the obtained mixture was cast into a casting mold for a lens comprising a mold made of glass and a gasket made of a resin (0.00D; the diameter of the lens set at 70 mm; the thickness of the lens set at 2.0 mm), and the polymerization was allowed to proceed in an electric oven while the temperature was slowly elevated from 40 to 90°C over 20 hours and, then, kept at 90°C for 1 hour.
When the polymerization was completed, the gasket and the mold were removed. The obtained product was treated by heating at 120°C for 2 hours, and a plastic lens was obtained. The YI value was 0.7 at the center of the obtained lens (the thickness: 2.0 mm), and the transmittance of ultraviolet light at a wavelength of 385 nm was 1.8%, showing excellent ability of absorbing ultraviolet light. The appearance was colorless and transparent, and no portions exhibiting uneven hue due to the bluing master fluid were found. The luminous transmittance was 90.8%, the value of the color coordinate a* was 0.05, the value of the color coordinate b* was -0.07, and the HAZE value was 0.6. The type of the ultraviolet light absorber and the type of the bluing master fluid used for preparation of the plastic lens substrate and the results of the evaluation are shown in Table 1.

### Example 2

A plastic lens was obtained in accordance with the same procedures as those conducted in Example 1 except that 0.04 parts by mass of 2,2',4,4'-tetrahydroxy-4-octyloxybenzophenone was used as the ultraviolet light absorber in place of 1 part by mass of 2-hydroxy-4-octyloxybenzophenone, and the amount of the bluing master fluid was 0.4 parts by mass. The YI value was 0.7 at the center of the obtained lens (the thickness: 2.0 mm), and the transmittance of ultraviolet light at a wavelength of 385 nm was 1.9%, showing excellent ability of absorbing ultraviolet light. As for the appearance, no portions exhibiting uneven hue due to the bluing master fluid were found. The luminous transmittance was 91.0%, the value of the color coordinate a* was 0.04, the value of the color coordinate b* was 0.01, and the HAZE value was 0.5. The type of the ultraviolet light absorber and the type of the bluing master fluid used for preparation of the plastic lens substrate and the results of the evaluation are shown in Table 1.

### Example 3

A plastic lens was obtained in accordance with the same procedures as those conducted in Example 1 except that 0.05 parts by mass of 2,2', 4'-trihydroxy-4-octyloxybenzophenone was used as the ultraviolet light absorber in place of 1 part by mass of 2-hydroxy-4-octyloxybenzophenone, and the amount of the bluing master fluid was 0.3 parts by mass. The YI value was 0.7 at the center of the obtained lens (the thickness: 2.0 mm), and the transmittance of ultraviolet light at a wavelength of 385 nm was 1.9%, showing excellent ability of absorbing ultraviolet light. As for the appearance, no portions exhibiting uneven hue due to the bluing master fluid were found. The luminous transmittance was 91.2%, the value of the color coordinate a* was 0.04, the value of the color coordinate b* was -0.50, and the HAZE value was 0.5. The type of the ultraviolet light absorber and the type of the bluing master fluid used for preparation of the plastic lens substrate and the results of the evaluation are shown in Table 1.

### Example 4

### (a) Preparation of Bluing master fluid B

A bluing master blue fluid was prepared by dispersing 6 parts by mass of a complex compound of cobalt oxide and aluminum oxide (CoO·Al₂O₃ (the diameter of particles: 40 to 50 nm); manufactured by C. I. KASEI Co., Ltd.) in 94 parts by mass of ethanol. A bluing master red fluid was prepared by mixing 2 parts by mass of a mixed fluid, in which 10 parts by mass of fine particles of Au (the diameter of particles: 20 nm; manufactured by NIPPON PAINT Co., Ltd.) were dispersed in 90 parts by mass of ethanol, and 98 parts by mass of 1,3-bisisocyanatomethylcyclohexane. Bluing master fluid B was prepared by mixing 5 parts by mass of the bluing master blue fluid, 5 parts by mass of the bluing master red fluid and 90 parts by mass of 1,3-bisisocyanatomethylcyclohexane.

### (b) Production of a plastic lens

To 46.9 parts by mass of 1,3-bisisocyanatomethylcyclohexane, 0.45 parts by mass of dimethyltin dichloride as the polymerization initiator, 1 part by mass of 2-hydroxy-4-octyloxybenzophenone as the ultraviolet light absorber, 0.16 parts by mass of butoxyethyl ethyl phosphate and 0.6 parts by mass of Bluing master fluid A prepared above in (a) were added. The resultant mixture was mixed with 26 parts by mass of dimercaptomethyldithiane and 26.5 parts by mass of pentaerythritol tetrakismercaptoacetate sufficiently under stirring. After the resultant mixture was degassed under stirring, the obtained mixture was cast into a casting mold for a lens comprising a mold made of glass and a gasket made of a resin (0.00D; the diameter of the lens set at 70 mm; the thickness of the lens set at 2.0 mm), and the polymerization was allowed to proceed in an electric oven while the temperature was slowly elevated from 40 to 120°C over 20 hours and, then, kept at 120°C for 2 hours.
When the polymerization was completed, the gasket and the mold were removed. The obtained product was treated by heating at 120°C for 2 hours, and a plastic lens was obtained. The YI value was 0.7 at the center of the obtained lens (the thickness: 2.0 mm), and the transmittance of ultraviolet light at a wavelength of 385 nm was 1.5%, showing excellent ability of absorbing ultraviolet light. The appearance was colorless and transparent, and no portions exhibiting uneven hue due to Bluing master fluid B were found. The luminous transmittance was 88.5%, the value of the color coordinate a* was 0.10, the value of the color coordinate b* was -0.03, and the HAZE value was 0.6. The type of the ultraviolet light absorber and the type of the bluing master fluid used for preparation of the plastic lens substrate and the results of the evaluation are shown in Table 1.

### Example 5

A plastic lens was obtained in accordance with the same procedures as those conducted in Example 4 except that 0.05 parts by mass of 2,2',4'-trihydroxy-4-octyloxybenzophenone was used as the ultraviolet light absorber, and the amount of Bluing master fluid B was 0.3 parts by mass. The YI value was 0.7 at the center of the obtained lens (the thickness: 2.0 mm), and the transmittance of ultraviolet light at a wavelength of 385 nm was 0.8%, showing excellent ability of absorbing ultraviolet light. As for the appearance, no portions exhibiting uneven hue due to Bluing master fluid B were found. The luminous transmittance was 88.4%, the value of the color coordinate a* was 0.08, the value of the color coordinate b* was -0.55, and the HAZE value was 0.5. The type of the ultraviolet light absorber and the type of the bluing master fluid used for preparation of the plastic lens substrate and the results of the evaluation are shown in Table 1.

### Example 6

A plastic lens was obtained in accordance with the same procedures as those conducted in Example 5 except that 0.1 part by mass of 2-(2'-hydroxy-5-octylphenyl)benzotriazole was used as the ultraviolet light absorber, and the amount of Bluing master fluid B was 0.1 part by mass. The YI value was 1.2 at the center of the obtained lens (the thickness: 2.0 mm), and the transmittance of ultraviolet light at a wavelength of 385 nm was 0%, showing excellent ability of absorbing ultraviolet light. As for the appearance, no portions exhibiting uneven hue due to Bluing master fluid B were found. The luminous transmittance was 89.0%, the value of the color coordinate a* was 0.12, the value of the color coordinate b* was 0.78, and the HAZE value was 0.4. The type of the ultraviolet light absorber and the type of the bluing master fluid used for preparation of the plastic lens and the results of the evaluation are shown in Table 1.

### Comparative Example 1

### (a) Preparation of Bluing master fluid C

A bluing master blue fluid was prepared by dispersing 6 parts by mass of a complex compound of cobalt oxide and aluminum oxide (CoO·Al₂O₃ (the diameter of particles: 40 to 50 nm); manufactured by C. I. KASEI Co., Ltd.) in 94 parts by mass of ethanol. A bluing master red fluid was prepared by mixing 2 parts by mass of a mixed fluid, in which 5 parts by mass of fine particles of perylene (the diameter of particles: 200 nm; manufactured by DAINICHI-SEIKA COLOR & CHEMICALS MFG. Co., Ltd.) were dispersed in 95 parts by mass of diethylene glycol bisallylcarbonate (CR-39), and 98 parts by mass of diethylene glycol bisallylcarbonate monomer (CR-39). Bluing master fluid C was prepared by mixing 5 parts by mass of the bluing master blue fluid, 5 parts by mass of the bluing master red fluid and 90 parts by mass of diethylene glycol bisallylcarbonate monomer (CR-39).

### (b) Production of a plastic lens

In accordance with the same procedures as those conducted in Example 1 except that 0.6 parts by mass of Bluing master fluid C was used in place of 0.6 parts by mass of Bluing master fluid A. The YI value was 0.7 at the center of the obtained lens (the thickness: 2.0 mm), and the transmittance of ultraviolet light at a wavelength of 385 nm was 1.8%, showing excellent ability of absorbing ultraviolet light. However, the HAZE value was 1.8 as measured with a flat plate having a thickness of 8 mm, and the appearance showed some haze. The luminous transmittance was 89.6%, the value of the color coordinate a* was 0.06, the value of the color coordinate b* was -0.05. The type of the ultraviolet light absorber and the type of the bluing master fluid used for preparation of the plastic lens substrate and the results of the evaluation are shown in Table 1.

### Comparative Example 2

A plastic lens was obtained in accordance with the same procedures as those conducted in Comparative Example 1 except that 0.04 parts by mass of 2,2',4,4'-tetrahydroxy-4-octyloxybenzophenone was used as the ultraviolet light absorber in place of 1 part by mass of 2-hydroxy-4-octyloxybenzophenone, and the amount of the bluing master fluid was 0.4 parts by mass. The YI value at the center of the obtained lens (the thickness: 2.0 mm), was 0.8, and the transmittance of ultraviolet light at a wavelength of 385 nm was 1.9%, showing excellent ability of absorbing ultraviolet light. However, the HAZE value was 1.6 as measured with a flat plate having a thickness of 8 mm, and the appearance showed some haze. The luminous transmittance was 90.1%, the value of the color coordinate a* was 0.02, and the value of the color coordinate b* was 0.24. The type of the ultraviolet light absorber and the type of the bluing master fluid used for preparation of the plastic lens substrate and the results of the evaluation are shown in Table 1.

### Comparative Example 3

A plastic lens was obtained in accordance with the same procedures as those conducted in Comparative Example 1 except that 0.05 parts by mass of 2,2',4'-trihydroxy-4-octyloxybenzophenone was used as the ultraviolet light absorber in place of 1 part by mass of 2-hydroxy-4-octyloxybenzophenone, and the amount of the bluing master fluid was 0.3 parts by mass. The YI value was 0.8 at the center of the obtained lens (the thickness: 2.0 mm), and the transmittance of ultraviolet light at a wavelength of 385 nm was 1.9%, showing excellent ability of absorbing ultraviolet light. However, the HAZE value was 1.5 as measured with a flat plate having a thickness of 8 mm, and the appearance showed some haze. The luminous transmittance was 90.4%, the value of the color coordinate a* was 0.03, and the value of the color coordinate b* was -0.46. The type of the ultraviolet light absorber and the type of the bluing master fluid used for preparation of the plastic lens substrate and the results of the evaluation are shown in Table 1.

### Comparative Example 4

### (a) Preparation of Bluing master fluid D

A bluing master blue fluid was prepared by dispersing 6 parts by mass of a complex compound of cobalt oxide and aluminum oxide (CoO·Al₂O₃ (the diameter of particles: 40 to 50 nm); manufactured by C. I. KASEI Co., Ltd.) in 94 parts by mass of ethanol. Bluing master fluid D was prepared by mixing 5 parts by mass of the bluing master blue fluid and 95 parts by mass of diethylene glycol bisallylcarbonate monomer (CR-39).

### (b) Production of a plastic lens

A plastic lens was obtained in accordance with the same procedures as those conducted in Comparative Example 1 except that 0.6 parts by mass of Bluing master fluid D was used in place of 0.6 parts by mass of Bluing master fluid B. The YI value was 0.7 at the center of the obtained lens (the thickness: 2.0 mm), and the transmittance of ultraviolet light at a wavelength of 385 nm was 1.9%, showing excellent ability of absorbing ultraviolet light. Although the transparency was excellent since the HAZE value was 0.6 as measured with a flat plate having a thickness of 8 mm, the lens had a greenish color as exhibited by the value of the color coordinate a* of 2.56, and the value of the color coordinate b* of -0.1. The luminous transmittance was 90.4%. The type of the ultraviolet light absorber and the type of the bluing master fluid used for preparation of the plastic lens substrate and the results of the evaluation are shown in Table 1.

### Comparative Example 5

A plastic lens was obtained in accordance with the same procedures as those conducted in Comparative Example 2 except that 0.4 parts by mass of Bluing master fluid D was used in place of 0.4 parts by mass of Bluing master fluid C. The YI value was 0.7 at the center of the obtained lens (the thickness: 2.0 mm), and the transmittance of ultraviolet light at a wavelength of 385 nm was 1.8%, showing excellent ability of absorbing ultraviolet light. Although the transparency was excellent since the HAZE value was 0.5 as measured with a flat plate having a thickness of 8 mm, the lens had a greenish color as exhibited by the value of the color coordinate a* of 3.22, and the value of the color coordinate b* of 0.06. The luminous transmittance was 90.7%. The type of the ultraviolet light absorber and the type of the bluing master fluid used for preparation of the plastic lens substrate and the results of the evaluation are shown in Table 1.

### Comparative Example 6

A plastic lens was obtained in accordance with the same procedures as those conducted in Comparative Example 3 except that 0.3 parts by mass of Bluing master fluid D was used in place of 0.3 parts by mass of Bluing master fluid C. The YI value was 0.8 at the center of the obtained lens (the thickness: 2.0 mm), and the transmittance of ultraviolet light at a wavelength of 385 nm was 1.9%, showing excellent ability of absorbing ultraviolet light. Although the transparency was excellent since the HAZE value was 0.5 as measured with a flat plate having a thickness of 8 mm, the lens had a greenish color as exhibited by the value of the color coordinate a* of 2.81, and the value of the color coordinate b* of -0.32. The luminous transmittance was 90.9%. The type of the ultraviolet light absorber and the type of the bluing master fluid used for preparation of the plastic lens substrate and the results of the evaluation are shown in Table 1.

### Comparative Example 7

A plastic lens was obtained in accordance with the same procedures as those conducted in Comparative Example 1 except that no bluing master fluid was added. The YI value was 2.3 at the center of the obtained lens (the thickness: 2.0 mm), and the lens had a slightly yellow color. The transmittance of ultraviolet light at a wavelength of 385 nm was 1.8%, the value of the color coordinate a* was 0.22, and the value of the color coordinate b* was 3.51, showing excellent ability of absorbing ultraviolet light. The HAZE value was 1.4 as measured with a flat plate having a thickness of 8 mm, showing excellent transparency. The luminous transmittance was 91.4%. The type of the ultraviolet light absorber used for preparation of the plastic lens substrate and the results of the evaluation are shown in Table 1.

### Comparative Example 8

A plastic lens was obtained in accordance with the same procedures as those conducted in Comparative Example 2 except that the bluing master fluid was not added. The YI value was 2.2 at the center of the obtained lens (the thickness: 2.0 mm), the value of the color coordinate a* was 0.14, and the value of the color coordinate b* was 4.10. The lens had a slightly yellow color. The transmittance of ultraviolet light at a wavelength of 385 nm was 1.9%, showing excellent ability of absorbing ultraviolet light. The HAZE value was 0.4 as measured with a flat plate having a thickness of 8 mm, showing excellent transparency. The luminous transmittance was 91.4%. The type of the ultraviolet light absorber used for preparation of the plastic lens substrate and the results of the evaluation are shown in Table 1.

### Comparative Example 9

A plastic lens was obtained in accordance with the same procedures as those conducted in Comparative Example 3 except that no bluing master fluid was added. The YI value was 2.2 at the center of the obtained lens (the thickness: 2.0 mm), the value of the color coordinate a* was 0.16, and the value of the color coordinate b* was 2.63. The lens had a slightly yellow color. The transmittance of ultraviolet light at a wavelength of 385 nm was 1.9%, showing excellent ability of absorbing ultraviolet light. The HAZE value was 0.4 as measured with a flat plate having a thickness of 8 mm, showing excellent transparency. The luminous transmittance was 91.7%. The type of the ultraviolet light absorber used for preparation of the plastic lens substrate and the results of the evaluation are shown in Table 1.

### Comparative Example 10

A plastic lens was obtained in accordance with the same procedures as those conducted in Example 4 except that no bluing master fluid was added. The YI value was 3.1 at the center of the obtained lens (the thickness: 2.0 mm), the value of the color coordinate a* was 0.19, and the value of the color coordinate b* was 5.81. The lens had a yellow color. The transmittance of ultraviolet light at a wavelength of 385 nm was 1.4%, showing excellent ability of absorbing ultraviolet light. The HAZE value was 0.4 as measured with a flat plate having a thickness of 8 mm, showing excellent transparency. The luminous transmittance was 89.8%. The type of the ultraviolet light absorber used for preparation of the plastic lens and the results of the evaluation are shown in Table 1.

### Comparative Example 11

A plastic lens was obtained in accordance with the same procedures as those conducted in Example 5 except that no bluing master fluid was added. The YI value was 2.6 at the center of the obtained lens (the thickness: 2.0 mm), the value of the color coordinate a* was 0.15, and the value of the color coordinate b* was 5.37. The lens had a yellow color. The transmittance of ultraviolet light at a wavelength of 385 nm was 0.7%, showing excellent ability of absorbing ultraviolet light. The HAZE value was 0.4 as measured with a flat plate having a thickness of 8 mm, showing excellent transparency. The luminous transmittance was 89.4%. The type of the ultraviolet light absorber used for preparation of the plastic lens substrate and the results of the evaluation are shown in Table 1.

### Comparative Example 12

A plastic lens was obtained in accordance with the same procedures as those conducted in Example 6 except that the bluing master fluid was not added. The YI value was 1.6 at the center of the obtained lens (the thickness: 2.0 mm), the value of the color coordinate a* was 0.15, and the value of the color coordinate b* was 2.50. The lens had a slightly yellow color. The transmittance of ultraviolet light at a wavelength of 385 nm was 0.%, showing excellent ability of absorbing ultraviolet light. The HAZE value was 0.4 as measured with a flat plate having a thickness of 8 mm, showing excellent transparency. The luminous transmittance was 89.7%. The type of the ultraviolet light absorber used for preparation of the plastic lens substrate and the results of the evaluation are shown in Table 1.

**Table 1-1**

| | Ultraviolet light absorber*¹ | Bluing master fluid*² | | | |
|---|---|---|---|---|---|
| | | A | B | C | D |
| Example 1 | SB 102 | used | - | - | - |
| Example 2 | SB 106 | used | - | - | - |
| Example 3 | SB 1060 | used | - | - | - |
| Example 4 | SB 102 | - | used | - | - |
| Example 5 | SB1060 | - | used | - | - |
| Example 6 | UV5411 | - | used | - | - |
| Comparative Example 1 | SB102 | - | - | used | - |
| Comparative Example 2 | SB 106 | - | - | used | - |
| Comparative Example 3 | SB1060 | - | - | used | - |
| Comparative Example 4 | SB 102 | - | - | - | used |
| Comparative Example 5 | SB 106 | - | - | - | used |
| Comparative Example 6 | SB 1060 | - | - | - | used |
| Comparative Example 7 | SB102 | - | - | - | - |
| Comparative Example 8 | SB 106 | - | - | - | - |
| Comparative Example 9 | SB 1060 | - | - | - | - |
| Comparative Example 10 | SB 102 | - | - | - | - |
| Comparative Example 11 | SB1060 | - | - | - | - |
| Comparative Example 12 | UV5411 | - | - | - | - |

**Table 1-2**

| | Transmittance of ultraviolet light | YI value | Luminous transmittance | L*a*b* (20 mm thickness) | | Appearance*³ | HAZE value (8 mm flat plate) |
|---|---|---|---|---|---|---|---|
| | | | | a* | b* | | |
| Example 1 | 1.8 | 0.7 | 90.8 | 0.05 | -0.07 | cl, tp | 0.6 |
| Example 2 | 1.9 | 0.7 | 91.0 | 0.04 | 0.01 | cl, tp | 0.5 |
| Example 3 | 1.9 | 0.7 | 91.2 | 0.04 | -0.50 | cl, tp | 0.5 |
| Example 4 | 1.5 | 0.7 | 88.5 | 0.10 | -0.03 | cl, tp | 0.6 |
| Example 5 | 0.8 | 0.7 | 88.4 | 0.08 | -0.55 | cl, tp | 0.5 |
| Example 6 | 0.0 | 1.2 | 89.0 | 0.12 | 0.78 | cl, tp | 0.4 |
| Comparative Example 1 | 1.8 | 0.7 | 89.6 | 0.06 | -0.05 | cl, some haze | 1.8 |
| Comparative Example 2 | 1.9 | 0.8 | 90.1 | 0.02 | 0.24 | cl, some haze | 1.6 |
| Comparative Example 3 | 1.9 | 0.8 | 90.4 | 0.03 | -0.46 | cl, some haze | 1.5 |
| Comparative Example 4 | 1.8 | 0.7 | 90.4 | 2.56 | -0.10 | gr, tp | 0.6 |
| Comparative Example 5 | 1.9 | 0.7 | 90.7 | 3.22 | 0.06 | gr, tp | 0.5 |
| Comparative Example 6 | 1.9 | 0.8 | 90.9 | 2.81 | -0.32 | gr, tp | 0.5 |
| Comparative Example 7 | 1.8 | 2.3 | 91.4 | 0.22 | 3.51 | sl yl, tp | 0.4 |
| Comparative Example 8 | 1.9 | 2.2 | 91.4 | 0.14 | 4.10 | sl yl, tp | 0.4 |
| Comparative Example 9 | 1.9 | 2.2 | 91.7 | 0.16 | 2.63 | sl yl, tp | 0.4 |
| Comparative Example 10 | 1.4 | 3.1 | 89.8 | 0.19 | 5.81 | yl, tp | 0.4 |
| Comparative Example 11 | 0.7 | 2.6 | 89.4 | 0.15 | 5.37 | yl, tp | 0.4 |
| Comparative Example 12 | 0.0 | 1.6 | 89.7 | 0.15 | 2.50 | sl yl, tp | 0.4 |

* 1: The types of the ultraviolet light absorber were as described in the following:
   sb102: 2-hydroxy-4-octyloxybenzophenone
   sb106: 2,2',4,4'-tetrahydroxy-4-octyloxybenzophenone
   sb1060: 2,2',4'-trihydroxy-4-octyloxybenzophenone
   UV5411: 2-(2'-hydroxy-5-octylphenyl)benzotriazole
* 2: Bluing master fluids were as described in the following:
   Bluing master fluid A: comprising a Co compound and fine particles of Au and using diethylene glycol bisallylcarbonate as the lens material monomer
   Bluing master fluid B: comprising a Co compound and fine particles of Au and using 1,3-bisisocyanatomethylcyclohexane as the lens material monomer
   Bluing master fluid C: comprising a Co compound and a perylene-based pigment and using diethylene glycol bisallylcarbonate as the lens material monomer
   Bluing master fluid D: comprising a Co compound alone and using diethylene glycol bisallylcarbonate as the lens material monomer
* 3:
   cl: colorless
   tp: transparent
   gr: green
   sl: slightly
   yl: yellow

### INDUSTRIAL APPLICABILITY

A plastic lens exhibiting excellent ability of absorbing ultraviolet light having a wavelength of about 400 nm, suppressed coloring and excellent transparency can be obtained. The obtained plastic lens is advantageously used as the plastic lens for spectacles.

## Claims

1. A plastic lens which comprises a plastic lens substrate obtained by polymerizing a composition comprising following Components (A) to (D):
(A) a lens material monomer;
(B) a cobalt compound expressed by CoO·Al₂O₃ and/or Co·Al₂O₄;
(C) fine particles of Au having an average diameter of 1 to 1,000 nm; and
(D) at least one ultraviolet light absorber selected from benzophenone-based ultraviolet light absorbers and benzotriazole-based ultraviolet light absorbers.

2. A plastic lens according to Claim 1, which further comprises component (E) a polymerization initiator which is at least one selected from organic peroxides and organic azobis compounds.

3. A plastic lens according to any one of Claims 1 and 2, wherein the ultraviolet absorber of Component (D) is at least one ultraviolet light absorber selected from 2-hydroxy-4-octyloxybenzophenone, 2,2',4,4' -tetrahydroxy-4-octyloxybenzophenone, 2,2',4'-trihydroxy-4-octyloxybenzophenone and 2-(2'-hydroxy-5-octylphenyl)benzotriazole.

4. A plastic lens according to any one of Claims 1 to 3, wherein the lens material monomer of Component (A) comprises diethylene glycol bisallylcarbonate.

5. A plastic lens according to any one of Claims 2 to 4, wherein component (E) the polymerization initiator is at least one polymerization initiator selected from benzoyl peroxide, diisopropyl peroxydicarbonate and t-butyl peroxy-2-ethylhexanoate.

6. A plastic lens according to any one of Claims 1 to 6, wherein a diameter of particles of the cobalt compound of Component (B) is 1 to 1,000 nm.

7. A plastic lens according to any one of Claims 1 to 6, wherein the plastic lens substrate has a YI value (a degree of yellowing) of 0.4 to 1.5 at a center when a thickness at the center is 2.0 mm and a transmittance of ultraviolet light of 5% or smaller at a wavelength of 385 nm.

8. A plastic lens according to any one of Claims 1 to 7, wherein a value of color coordinate a* is 0 to 1 and a value of color coordinate b* is -1 to 1 in a L*a*b* color system.

9. A plastic lens according to Claim 8, wherein a HAZE value is 0 to 1 as measured with a flat plate having a thickness of 8 mm.

10. A plastic lens according to any one of Claims 1 to 9, wherein the plastic lens is a plastic lens for spectacles.

11. A process for producing a plastic lens which comprises mixing following components:
(A) a lens material monomer;
(B) a dispersion of a cobalt compound which comprises a cobalt compound expressed by CoO·Al₂O₃ and/or Co·Al₂O₄;
(C) a dispersion of fine particles of Au which comprises fine particles of Au having an average diameter of 1 to 1,000 nm; and
(D) at least one ultraviolet light absorber selected from benzophenone-based ultraviolet light absorbers and benzotriazole-based ultraviolet light absorbers; and polymerizing an obtained composition to prepare a plastic lens substrate.

12. A process for producing a plastic lens according to Claim 11, wherein component (E) a polymerization initiator which is at least one selected from organic peroxides and organic azobis compounds is further mixed to obtain the composition.

13. A process for producing a plastic lens according to any one of Claims 11 and 12, wherein the ultraviolet absorber of Component (D) is at least one ultraviolet light absorber selected from 2-hydroxy-4-octyloxybenzophenone, 2,2',4,4'-tetrahydroxy-4-octyloxybenzophenone, 2,2',4'-tri-hydroxy-4-octyloxybenzophenone and 2-(2'-hydroxy-5-octylphenyl)benzotriazole

14. A process for producing a plastic lens according to any one of Claims 11 to 13, wherein the lens material monomer of Component (A) comprises diethylene glycol bisallylcarbonate.

15. A process for producing a plastic lens according to any one of Claims 11 to 14, wherein the polymerization initiator of Component (E) is at least one polymerization initiator selected from benzoyl peroxide, diisopropyl peroxydicarbonate and t-butyl peroxy-2-ethylhexanoate.

16. A process for producing a plastic lens according to any one of Claims 11 to 15, wherein a diameter of particles of the cobalt compound of Component (B) is 1 to 1,000 nm.

17. A process for producing a plastic lens according to any one of Claims 11 to 16, which comprises casting the composition into a mold and polymerizing the composition.

18. A process for producing a plastic lens according to any one of Claims 11 to 17, wherein the dispersion of a cobalt compound is a dispersion obtained by dispersing the cobalt compound into a dispersant, and the dispersion of fine particles of Au is a dispersion obtained by dispersing the fine particles of Au into a dispersant.

19. A process for producing a plastic lens according to any one of Claims 11 to 18, wherein a portion of the dispersant or the entire dispersant is removed by degassing the composition.

20. A process for producing a plastic lens according to any one of Claims 18 and 19, wherein the dispersant comprises at least one dispersant selected from alcohols, ethers and surfactants.

21. A process for producing a plastic lens according to Claim 20, wherein the dispersant is a mixed solution comprising butanol, methylcellosolve and a surfactant.

22. A process for producing a plastic lens according to any one of Claims 11 and 21, wherein the plastic lens is a plastic lens for spectacles.
